(19) Europäisches Patentamt
European Patent Office
Office européen des brevets

(11) Veröffentlichungsnummer: **0 063 278**
**A1**

(12) # EUROPÄISCHE PATENTANMELDUNG

(21) Anmeldenummer: 82102768.7

(22) Anmeldetag: 01.04.82

(51) Int. Cl.$^3$: **H 05 B 7/101**

(30) Priorität: 16.04.81 DE 3115514

(43) Veröffentlichungstag der Anmeldung: 27.10.82 Patentblatt 82/43

(84) Benannte Vertragsstaaten: AT BE CH DE FR GB IT LI LU NL SE

(71) Anmelder: Arc Technologies Systems, Ltd.
Box 61
Grand Cayman(KY)

(72) Erfinder: Schudlich, Kurt
Hartkortring 48
D-5810 Witten-Annen(DE)

(72) Erfinder: Vielstich, Günter
Friedrich-Liszt-Strasse 14
D-5810 Witten-Heven(DE)

(72) Erfinder: Mühlenbeck, Josef, Ing. grad.
Columbusstrasse 1
D-5802 Wetter 4(DE)

(72) Erfinder: Otto, Josef, Dr.-Ing.
Am Wasserturm 5
D-5802 Wetter 4(DE)

(72) Erfinder: Bauer, Hannsgeorg, Dr.-Ing.
Platanenweg 21
D-5810 Witten-Bommern(DE)

(72) Erfinder: Zöllner, Dieter H., Dr., Dipl.-Chem.
Händelstrasse 19
D-8501 Schwaig b. Nürnberg(DE)

(72) Erfinder: Rittmann, Friedrich
Am Buck 18
D-8501 Rückersdorf b. Nürnberg(DE)

(74) Vertreter: Füchsle, Klaus, Dipl.-Ing. et al,
Hoffmann . Eitle & Partner Patentanwälte
Arabellastrasse 4
D-8000 München 81(DE)

(54) **Vorrichtung zum Annippeln von aktiven Elektrodenabschnitten an eine Kombinationselektrode.**

(57) Es handelt sich um eine Vorrichtung zum Annippeln von aktiven Elektrodenabschnitten an den permanenten oberen Abschnitt einer Kombinationselektrode mittels die Verbindung bildender Schraubnippel.

Um eine derartige Vorrichtung zu schaffen, die einfach, robust und zuverlässig im Aufbau ist und es erlaubt, an das untere Ende des permanenten oberen Abschnitts einer Kombinationselektrode präzise und schnell den verbrauchten Elektrodenabschnitt abzunippeln und einen neuen aktiven Elektrodenabschnitt anzunippeln, besteht die Vorrichtung aus einem äußeren, im wesentlichen hohlzylindrischen Element (100) und einem koaxial im äußeren Element (100) angeordneten inneren, ebenfalls im wesentlichen hohlzylindrischen Element (200), ist das innere Element (200) als Kupplungsvorrichtung ausgebildet, die mit einem am oberen Ende des permanenten Abschnitts der Kombinationselektrode angeordneten Anschlußelement kuppelbar ist, und ist ein Antrieb (300) vorgesehen, durch den das innere Element (200) in bezug auf das äußere Element (100) um die Achse drehbar ist.

./...

EP 0 063 278 A1

FIG.1
108
214
105
107
102
101
201
A
213
105
100
103
206
207
207a
212
207b
208
211
104
206b
206a
205
205
203
209
210
200
300
301
40
204
215
10
1
14

# Vorrichtung zum Annippeln von aktiven Elektrodenabschnitten an eine Kombinationselektrode

Die Erfindung betrifft eine Vorrichtung zum Annippeln von aktiven Elektrodenabschnitten an den permanenten oberen Abschnitt einer Kombinationselektrode mittels die Verbindung bildender Schraubnippel.

Bei Lichtbogenöfen, insbesondere zur Elektrostahlherstellung, gelangen Elektroden zum Einsatz, die insbesondere bei großen Gefäßgrößen ein erhebliches Gewicht besitzen.

Im Zuge der gerade in letzter Zeit gemachten Anstrengungen zu Energieeinsparungen sind schon sogenannte Kombinationselektroden für den genannten Einsatzzweck vorgeschlagen worden, die aus einem oberen aus Metall bestehenden und damit permanenten Abschnitt und einem oder mehreren aktiven, aus sich verbrauchendem oder nur langsam sich verbrauchendem Material bestehenden Elektrodenabschnitt bzw. Elektrodenabschnitten zusammengesetzt sind. Während der obere Metallschaft aus Kupfer oder dgl. besteht und Kühleinrichtungen aufweist, sind die aktiven Elektrodenabschnitte meistens aus Graphit. Kombinationselektroden der angesprochenen Konstruktion sind beispielsweise aus der EP-OS 10 305 und der EP-OS 12 537 ersichtlich.

Nach dem Verbrauch eines aktiven Elektrodenabschnitts muß dieser durch einen neuen aktiven Elektrodenabschnitt ersetzt werden. Hierfür muß die Elektrode aus dem Ofen entnommen werden. Aufgrund des beschriebenen Gewichts der Elektrode ist deren Handhabung nur über ein schweres Hebezeug, z.B. mittels eines Portalkrans, handhabbar. Nach der Entnahme der Elektrode aus dem Ofen muß der verbrauchte aktive Elektrodenabschnitt von dem permanenten oberen Abschnitt abgeschraubt und ein neuer aktiver Elektrodenabschnitt an den permanenten oberen Abschnitt angeschraubt werden. Diese Vorgänge können nur mittels geeigneter Vorrichtung in der gebotenen schnellen Weise und unter Berücksichtigung humaner Arbeitsbedingungen vorgenommen werden.

Bei herkömmlichen, ganz aus sich verbrauchendem Material, z.B. Graphit, bestehenden Elektroden sind zum Annippeln eines neuen Abschnittes an den schon teilweise verbrauchten Elektrodenstrang schon Vorrichtungen bekannt geworden. Allerdings erfolgt das Annippeln bei konventionellen Elektroden anders als dies bei den Kombinationselektroden der Fall ist. Bei der konventionellen Elektrode erfolgt nämlich das Annippeln des neuen aktiven Elektrodenabschnitts am oberen Ende des im wesentlichen verbrauchten Elektrodenstrangs, wobei der Elektrodenstrang im Ofen verbleiben kann. Hierzu wird ein neuer Elektrodenabschnitt mit Hilfe eines Hebezeugs, z.B. des Hallenkrans, über den in seiner Elektrodenfassung am Ofen eingespannten Elektrodenstrang bewegt. Danach wird der neue Elektrodenabschnitt auf das obere Ende des Elektrodenstrangs im Ofen abgesenkt, so daß der Schraubnippel, der entweder am unteren Ende des neuen Elektrodenabschnitts oder am oberen Ende des Elektrodenstrangs angeordnet ist, in die Schachtel des anderen Elektrodenabschnitts eingeführt wird. Danach erfolgt das Annippeln des neuen Elektrodenabschnitts an das obere Ende des Elektrodenstrangs durch Drehen des neuen Elektrodenabschnitts.

Eine bekannte Vorrichtung zum Annippeln konventioneller Elektroden (DE-OS 16 90 556) besteht aus zwei ineinander koaxial angeordneten Zylindern. Der innere Zylinder ist mittels eines Antriebs in bezug auf den äußeren Zylinder drehbar. Der innere Zylinder weist an seinem unteren Ende an das untere Ende des anzunippelnden Elektrodenabschnitts radial anpreßbare Spannmittel auf. Der äußere Zylinder ist in der Einsatzstellung gegen die ofenfeste Elektrodenfassung drehfest abstützbar. Diese Vorrichtung ermöglicht ein maschinelles Annippeln eines Elektrodenabschnitts an eine in einer ofenfesten Elektrodenfassung eingespannte Elektrode.

Die beschriebene Vorrichtung ist relativ aufwendig ausgebildet. Es sind nämlich zwei Elektromotore vorgesehen, von denen der eine oberhalb des inneren Zylinders angeordnet ist und dem Einspannen des Elektrodenabschnitts durch eine axiale Relativbewegung zwischen den beiden Zylindern dient, während der andere Motor unweit des unteren Endes der Vorrichtung am äußeren Zylinder angeordnet ist und über einen Schneckentrieb den inneren Zylinder für den Annippelungsvorgang dreht. Diese Bauart ergibt ferner nicht nur eine recht große Bauhöhe der Vorrichtung, sondern auch in Ofennähe einen großen Durchmesser. Besonders der letztgenannte Umstand hat sich recht nachteilig für die Bedienbarkeit der Vorrichtung erwiesen. Es kommt hinzu, daß beim Einspannen des Elektrodenabschnitts der als Spannbüchse ausgebildete innere Zylinder in Richtung seiner Längsachse gegenüber einem ihn umfassenden konischen Ring verschoben werden muß, so daß die Spannelemente zumindest zu Beginn der Einspannbewegung den Elektrodenabschnitt mechanisch beschädigen können; dies kann eine spätere Rißbildung in der Elektrode bedingen.

Zur Behebung dieser Nachteile ist die bekannte Vorrichtung dadurch weitergebildet worden (DE-AS 24 18 688), daß zwischen den beiden Zylindern ein dritter Zylinder (Zwischenzylinder ) koaxial angeordnet ist, der zwecks Einspannens des anzunippelnden Elektrodenabschnittes in Richtung seiner Längsachse mittels einer Gewindemutter verschiebbar geführt ist, die über einen Zahn- oder Kettentrieb mittels eines neben dem oberen Teil des Außenzylinders angeordneten Motors drehbar ist, der zum Annippeln des Elektrodenabschnitts auf die Drehung des Zwischenzylinders und des mit diesem drehfest verbundenen Innenzylinders bewirkt, wofür eine beim Spannvorgang den Innenzylinder gegen Drehung sichernde Arretierung gelöst wird.

Aufgrund der geschilderten Ausbildung besitzt diese Vorrichtung in Ofennähe einen den Elektrodendurchmesser nur geringfügig überschreitenden Außendurchmesser. Außerdem erfolgt das Spannen und das Annippeln nur noch mittels eines gemeinsamen Motors, der seitlich des Kopfes der Vorrichtung angeordnet ist. Zwar ergibt sich dadurch eine gewisse Verkürzung der Vorrichtungshöhe, die aber nach wie vor relativ groß ist, da der anzunippelnde neue Elektrodenabschnitt an seinem unteren Ende eingespannt wird, so daß die Vorrichtungshöhe nach wie vor wesentlich größer ist als die Länge des Elektrodenabschnitts. Dies ist bei der zur Rede stehenden Vorrichtung deshalb von wesentlichem Nachteil, weil drei Zylinder vorgesehen sind, die die angesprochene Länge besitzen, wodurch die Vorrichtung nicht nur sehr materialaufwendig, sondern auch entsprechend schwer wird.

Beiden beschriebenen Vorrichtungen ist der Nachteil gemeinsam, daß der neue Elektrodenabschnitt mittels einer Spannvorrichtung erfaßt wird, die eine komplizierte Ausbildung der gesamten Vorrichtung bedingt und darüber hinaus das Aufnehmen eines neuen Elektrodenabschnitts in die Annippelungsvorrichtung erschwert, da hierfür die Annippelungsvorrichtung exakt in bezug auf den Elektrodenabschnitt ausgerichtet und ebenso exakt die Annippelungsvorrichtung über den Elektrodenabschnitt geschoben werden muß.

Bei einer weiteren bekannten Annippelungsvorrichtung (DE-OS 23 38 741) ist der mit der Elektrode zu verbindende Elektrodenabschnitt in einem gegenüber der ofenseitigen Elektrodenfassung drehbaren und höhenverstellbaren Fassungsring festklemmbar. Hierfür ist an einem Traggerüst unter Zwischenschaltung eines Gehänges ein an dem Traggerüst geführter Tragring angeordnet, der eine Antriebseinrichtung trägt, über welche der an dem Tragring aufgehängte Fassungsring - der mit an seinem Umfang angeordneten, ölhydraulisch betätigten Klemmeinrichtungen für das in seinem Innenraum befindliche Elektrodenteilstück versehen ist unter Zwischenschaltung eines Zahnkranzes, der an dem Fassungsring befestigt und gegenüber dem ihn tragenden Tragring drehbar und entsprechend der Gewindesteigung der Nippelverbindung zwischen der Elektrode und dem Elektrodenabschnitt axial verfahrbar ist. Das Gehänge ist dabei quer zur Längsachse der Elektrode verschiebbar und das mit den zugehörigen Bauteilen als bewegliche Baueinheit ausgeführte Traggerüst mit Führungsteilen versehen, über welche es mit der Elektrodenfassung in genau definierter Lage verbindbar ist. Nach Fertigstellung der Nippelverbindung zwischen der Elektrode und dem auf diese aufgesetzten Elektrodenabschnitt kann die Annippelungsvorrichtung - nach Lösen der Klemmeinrichtung des Fassungsrings - mittels des Hebezeugs wieder von der Elektrodenfassung abgehoben und anderweitig verwendet werden.

Auch diese Vorrichtung weist einen relativ komplizierten Aufbau auf. Dies ist zum einen dadurch bedingt, daß eine aufwendige Klemmeinrichtung vorgesehen ist und zum anderen dadurch, daß ein spezielles Traggerüst für den Tragring und den Fassungsring notwendig ist, wodurch sich insbesondere der Durchmesser der Vorrichtung senkrecht zur Achse der Elektrode erheblich vergrößert. Dies erschwert aber, wie bereits im Zusammenhang mit der erstgenannten Vorrichtung ausgeführt worden ist, die Bedienbarkeit der Vorrichtung.

Aufgabe der Erfindung ist es, eine Vorrichtung zum Annippeln für Kombinationselektroden zu schaffen, die einfach, robust und zuverlässig im Aufbau ist, das An- und Abkuppeln der Kombinationselektrode schnell, exakt und ohne Handarbeit ermöglicht, und es erlaubt, an das untere Ende des permanenten oberen Abschnitts einer Kombinationselektrode präzise und schnell den verbrauchten Elektrodenabschnitt abzunippeln und einen neuen aktiven Elektrodenabschnitt anzunippeln.

Diese Aufgabe wird dadurch gelöst,

a) daß die Vorrichtung aus einem äußeren, im wesentlichen hohlzylindrischen Element und einem koaxial im äußeren Element angeordneten inneren, ebenfalls im wesentlichen hohlzylindrischen Element besteht,

b) daß das innere Element als Kupplungsvorrichtung ausgebildet ist, die mit einem am oberen Ende des permanenten Abschnitts der Kombinationselektrode angeordneten Anschlußelement kuppelbar ist und

c) daß ein Antrieb vorgesehen ist, durch den das innere Element in bezug auf das äußere Element um die Achse drehbar ist.

Die erfindungsgemäße Annippelungsvorrichtung wird mittels eines üblichen Hebezeugs, z.B. des Hallenkrans, bewegt.

Zum Annippeln eines unverbrauchten aktiven Elektrodenabschnitts an das untere Ende einer Kombinationselektrode wird die erfindungsgemäße automatische Annippelungsvorrichtung mit dem oberen Ende des permanenten oberen Abschnitts der Kombinationselektrode gekuppelt, wofür das obere Ende des permanenten oberen Abschnitts einer derartigen Elektrode entsprechend ausgebildet ist, nämlich ein Anschlußelement aufweist, das an die Kupplungsvorrichtung der erfindungsgemäßen Annippelungsvorrichtung angepaßt ist. Die auf diese Weise angekuppelte Kombinationselektrode kann dann aus ihrer Fassung im Ofen herausgehoben und an einen geeigneten Ort neben dem Ofen gefahren werden, wo der verbrauchte aktive Elektrodenabschnitt abgeschraubt und ein neuer aktiver Elektrodenabschnitt an das untere Ende der Elektrode angeschraubt wird. Für den Schraubvorgang wird das innere Element der erfindungsgemäßen automatischen Annippelungsvorrichtung in bezug auf das äußere Element durch den Antrieb in der entsprechenden Richtung um die gemeinsame Achse gedreht. Nach dem Annippelungsvorgang wird die neu gerüstete Kombinationselektrode wieder über den Ofen gefahren und in die Fassung des Ofens abgesenkt. Danach wird die Annippelungsvorrichtung wieder abgekuppelt, so daß sie für einen neuen Arbeitsgang zur Verfügung steht.

Zweckmäßige Vorrichtungen, die die Handhabung der aktiven Elektrodenabschnitte sowohl beim Abnippel- als auch beim Annippelvorgang handhaben, werden später noch beschrieben werden.

Die erfindungsgemäße Annippelungsvorrichtung zeichnet sich durch einen einfachen und gewichtssparenden Aufbau aus. Sowohl das äußere als auch das innere Element können bezüglich ihrer axialen Länge relativ kurz gehalten werden.

Durch die Ausgestaltung des inneren Elements als Kupplungsvorrichtung arbeitet die erfindungsgemäße Annippelungsvorrichtung schnell und zuverlässig. Darüber hinaus trägt die Ausbildung als Kupplungsvorrichtung auch zum einfachen Aufbau der Gesamtanordnung bei.

Ein weiterer Vorteil der erfindungsgemäßen Annippelungsvorrichtung besteht darin, daß sie nicht nur zum Betrieb mit sogenannten Kombinationselektroden geeignet sind, sondern ohne große Umrüstmaßnahmen auch für die Bedienung konventioneller Elektroden einsetzbar ist. Die konventionellen Elektroden müssen lediglich mit einem Anschlußelement ausgerüstet werden, das der Kupplungsvorrichtung der erfindungsgemäßen Annippelungsvorrichtung angepaßt ist.

Vorteilhafte Weiterbildungen der erfindungsgemäßen Annippelungsvorrichtung ergeben sich aus den übrigen Patentansprüchen.

Eine vorteilhafte Ausbildung des als Kupplungsvorrichtung dienenden inneren Elements besteht darin, daß diese Kupplungsvorrichtung eine steuerbare Verriegelungseinrichtung für den lösbaren Eingriff mit einem Anschlußelement einer Elektrode und eine Einführungsanordnung zum Bewegen des Anschlußelements der Elektrode zu der Verriegelungseinrichtung umfaßt und das äußere Element eine zur Stoßdämpfung in Einsatzrichtung relativ zur Verriegelungseinrichtung bewegliche Anhängevorrichtung zum Einhängen der Annippelungsvorrichtung an einem Hebezeug aufweist.

Danach weist die Kupplungsvorrichtung der erfindungsgemäßen Annippelungsvorrichtung eine steuerbare Verriegelungseinrichtung auf, wobei die Steuerung dieser Verriegelungseinrichtung selbsttätig oder über eine Fernsteuerung von Hand, z.B. durch die Bedienungsperson des Hebezeugs, erreicht werden kann.

Um schon beim Zusammenführen der Annippelungsvorrichtung mit dem Anschlußelement einer Elektrode Handarbeit zu vermeiden, weist die Kupplungsvorrichtung der erfindungsgemäßen Annippelungsvorrichtung ferner eine Einführungsanordnung auf, mittels der das Anschlußelement der Elektrode zwangsweise in den Bereich der Verriegelungseinrichtung geführt wird. Der Führer des Hebezeugs muß deshalb die Annippelungsvorrichtung nur in etwa in den Bereich des Anschlußelements einer Elektrode absenken, worauf sich die Kupplungsvorrichtung bzw. deren Verriegelungseinrichtung beim weiteren Absenken der Annippelungsvorrichtung selbsttätig in bezug auf das Anschlußelement zentriert, so daß die Verriegelungseinrichtung der Kupplungsvorrichtung sicher in Eingriff mit dem Anschlußelement des Elektrodenabschnitts gelangt.

Nachdem das Material der einschlägigen Elektroden, z.B. Graphit, in bezug auf Stoß oder dgl. durchaus empfindlich ist, ist bei der Kupplungsvorrichtung der erfindungsgemäßen Annippelungsvorrichtung dafür Sorge getragen, daß beim Kupplungsvorgang eine Beschädigung der Elektrode bzw. deren Anschlußteile vermieden wird. Hierzu weist die erfindungsgemäße Annippelungsvorrichtung eine zur Stoßdämpfung in Einsatzrichtung relativ zur Verriegelungseinrichtung bewegliche Anhängevorrichtung auf. Durch diese Anordnung werden beim Auftreffen der Annippelungsvorrichtung auf die Elektrode und beim Anheben bzw. Absenken der Elektrode unzulässige Stoßkräfte kompensiert, wodurch eine Beschädigung der Elektrode, aber auch der übrigen Bauteile, vermieden ist.

Nach einer weiteren vorteilhaften Ausführungsform ist die Verriegelungseinrichtung pneumatisch oder hydraulisch steuerbar. Die Steuerung kann, wie noch näher zu schildern sein wird, beim Aufsetzen der Annippelungsvorrichtung auf den Elektrodenabschnitt bzw. beim Lösen der Vorrichtung von dem Elektrodenabschnitt aufgrund dieses Vorgangs selbst erfolgen bzw. ferngesteuert durch eine Bedienungsperson, z.B. den Führer des Hebezeugs, durchgeführt werden.

Eine besonders einfache Konstruktion der eigentlichen Verriegelungseinrichtung ergibt sich dann, wenn diese einen senkrecht zur Einsatzrichtung von einer Öffnungsstellung in eine Verriegelungsstellung und umgekehrt beweglichen Verriegelungsbolzen umfaßt. Dadurch ist nicht nur die Verriegelungseinrichtung selbst besonders einfach und auch betriebssicher ausgebildet, sondern es ergibt sich auch eine unproblematische konstruktive Gestaltung des Anschlußelements des jeweiligen Elektrodenabschnitts.

Dieser Verriegelungsbolzen ist zweckmäßigerweise über einen pneumatischen oder hydraulischen Betätigungszylinder beweglich, der die geschilderten Steuerungsmöglichkeiten zuläßt.

Um den Betätigungszylinder vor dem rauhen Betrieb bei der Stahlherstellung zu schützen und dessen zuverlässige Funktionsweise zu gewährleisten, ist der Betätigungszylinder im inneren Element oberhalb des Verriegelungsbolzens und parallel zu diesem angeordnet.

Durch diese Anordnungsweise ergibt sich ferner eine einfache Konstruktion der Verriegelungseinrichtung dadurch, daß die Kolbenstange des Betätigungszylinders und der Verriegelungsbolzen endseitig über eine zu der Einsatzrichtung parallele Traverse miteinander verbunden sind.

Bei einer besonders vorteilhaften Ausführungsform der erfindungsgemäßen Annippelungsvorrichtung, bei welcher die Kupplungsvorrichtung durch den jeweiligen Betriebsvorgang selbst gesteuert werden kann, ist der Betätigungszylinder über eine Steuereinrichtung derart betätigbar, daß beim Aufsetzen der Annippelungsvorrichtung auf das Anschlußelement einer Elektrode der Verriegelungsbolzen aus der Offenstellung in die Verriegelungsstellung bewegt wird, beim Vorhandensein einer Zugkraft auf die Annippelungsvorrichtung der Verriegelungsbolzen in der Verriegelungsstellung arretiert ist und/oder im zugkraftfreien Zustand bzw. beim Unterschreiten eines bestimmten Mindestwerts der Zugkraft der Verriegelungsbolzen aus der Verriegelungsstellung in die Offenstellung bewegt wird.

Bei dieser Ausführungsform kann die Steuereinrichtung beim Aufsetzen der Annippelungsvorrichtung auf das Anschlußelement einer Elektrode den Steuerimpuls, der vermittels der Steuereinrichtung über den Betätigungszylinder veranlaßt, den Verriegelungsbolzen aus der Offenstellung in die Verriegelungsstellung zu bewegen, auf beliebige Weise erhalten. Es ist z.B. möglich, einen mechanischen Fühler vorzusehen, der dann geschaltet wird, wenn das Anschlußelement des Elektrodenabschnitts vollständig in die Einführungsanordnung eingeführt worden ist, da in dieser Stellung dann der Verriegelungsbolzen der Kupplungsvorrichtung in eine entsprechende Öffnung im Anschlußelement des Elektrodenabschnitts einfahren kann.

Solange die jeweilige Elektrode über die Annippelungsvorrichtung am Hebezeug hängt, muß aus Sicherheitsgründen dafür Sorge getragen werden, daß versehentlich nicht die Verriegelungseinrichtung der Kupplungsvorrichtung, z.B. durch einen Bedienungsfehler, gelöst wird. Diese Maßgabe wird dadurch erreicht, daß beim Vorhandensein einer Zugkraft auf die Annippelungsvorrichtung der Verriegelungsbolzen der Kupplungsvorrichtung in der Verriegelungsstellung arretiert ist. Dieses Arretieren ist so zu verstehen, daß selbst bei Betätigen der Vorrichtung, die dazu dient, mittels des Betätigungszylinders den Verriegelungsbolzen aus der Verriegelungsstellung in die Offenstellung zu bewegen, dieser Vorgang solange nicht ausgeführt wird, solange Zugkraft auf die Kupplungsvorrichtung wirkt, d.h. die Elektrode ohne Unterstützung am Haken des Hebezeugs hängt.

Hingegen soll sich beim Absetzen einer Elektrode auf dem Boden oder nach dem Einsetzen einer Elektrode in die Fassung des Ofens die Kupplungsvorrichtung der erfindungsgemäßen Annippelungsvorrichtung bei Bedarf durch hydraulische oder pneumatische Betätigung oder selbsttätig, d.h. auf alle Fälle ohne Herangehen einer Bedienungsperson an die Vorrichtung, lösen lassen. Auch diese Aufgabe kann zugkraftabhängig erfüllt werden, indem nur im zugkraftfreien Zustand bzw. beim Unterschreiten eines bestimmten Mindestwerts der auf die Annippelungsvorrichtung wirkenden Zugkraft der Verriegelungsbolzen aus der Verriegelungsstellung in die Offenstellung bewegt wird.

Die auf die Annippelungsvorrichtung wirkende Zugkraft kann auf beliebige Weise gemessen und zur Initiierung einschlägiger Steuerbefehle für die Verriegelungseinrichtung herangezogen werden.

Bei einer bevorzugten Ausführungsform, bei der die Anhängevorrichtung einen Anhängebügel umfaßt, der sich an dem äußeren Element der Annippelungsvorrichtung über eine Federanordnung beweglich abstützt, die der im Einsatz auftretenden Zugkraft entgegenwirkt, kann zu dem oben bezeichneten Zweck die Steuereinrichtung für den Betätigungszylinder mit der Federanordnung des Anhängebügels zusammenwirken. In diesem Fall tastet also die Steuereinrichtung den Zustand der Federanordnung ab, um auf diese Weise die auf die Annippelungsvorrichtung wirkende Zugkraft zu erfassen und davon abhängig den Steuerbefehl für die Verriegelungseinrichtung zu erzeugen.

Die angesprochene Ausbildung der Anhängevorrichtung mittels eines abgefederten Anhängebügels ergibt darüber hinaus eine einfache Konstruktion, die trotzdem für ein wirksames Auffangen von Stoßkräften sorgt, die beim Ankuppelungsvorgang bzw. beim Absetzen oder Anheben eines Elektrodenabschnitts mittels des Hubzeugs auftreten.

Eine besonders einfache Ausbildung der Einführungsanordnung für das Anschlußelement eines Elektrodenabschnitts in die Kupplungsvorrichtung besteht darin, daß diese Einführungsanordnung aus einem in Einführungsrichtung des Anschlußelements eines Elektrodenabschnitts in die Kupplungsvorrichtung sich verjüngenden, trichterförmigen Wandungselements des inneren Elements gebildet ist. Dieses trichterförmig sich verjüngende Wandungselement kann einstückig mit dem inneren Element ausgebildet werden. An dem inneren Ende dieses trichterförmigen Wandungselements kann zugleich das Lager für den Betätigungszylinder der Verriegelungseinrichtung angeschlossen sein.

Es ist ferner zweckmäßig, daß an dem äußeren Element ein vorzugsweise hydraulisch betätigter Motor mit einem Ritzel angeordnet ist, das mit einem Zahnkranz des inneren Elements im Eingriff steht. Dadurch ist eine einfache Antriebsanordnung für das Drehen des inneren Elements in bezug auf das äußere Element geschaffen.

Nach einer vorteilhaften Weiterbildung dieser Antriebsanordnung kann die Achse des Ritzels senkrecht zur Achse der Elemente verlaufen und der Zahnkranz an der unteren Stirnfläche des inneren Elements angeordnet sein. Durch diese Maßnahme ergibt sich ein möglichst kleiner Durchmesser für die Gesamtanordnung.

Um stets den jeweiligen Elektrodenabschnitt exakt und mit dem richtigen Anzugselement mit der diesbezüglichen Elektrode zu verbinden, ist es von Vorteil, daß im Getriebezug zwischen dem Motor und dem inneren Element eine Anordnung zur Drehmomentbegrenzung vorgesehen ist. Die Anordnung zur Drehmomentbegrenzung kann in beliebiger und bekannter Weise ausgebildet sein.

Um die pneumatischen oder hydraulischen Leitungen der Baugruppen des inneren Elements in einfacher Weise von außen in das bewegliche innere Element hineinzuführen, können diese Leitungen über ein an diesem angeordnetes Drehgelenk geführt werden. Auch dieses Drehgelenk kann von beliebiger und bekannter Bauart sein.

Erfindungsgemäß ist ferner eine Zuführvorrichtung für mindestens einen aktiven Elektrodenabschnitt vorgesehen, die mit der Kupplungsvorrichtung für den permanenten Abschnitt einer Kombinationselektrode zusammenwirkt.

Diese Zuführvorrichtung dient dazu, den verbrauchten aktiven Elektrodenabschnitt von der Kombinationselektrode abzunippeln und/oder einen neuen aktiven Elektrodenabschnitt an das untere Ende einer neu zu rüstenden Kombinationselektrode anzunippeln. Der neue Elektrodenabschnitt kann dabei entweder unmittelbar mit dem unteren Ende des oberen permanenten Abschnitts (Metallschaft) der Kombinationselektrode oder mit dem unteren Ende eines noch verwendbaren aktiven Elektrodenabschnitts verbunden werden. Es ist für jeden Fall ein geeigneter Schraubnippel vorgesehen.

Die Zuführvorrichtung muß geeignet sein, einen verbrauchten Elektrodenabschnitt, der noch weitgehend seine hohe Betriebstemperatur aufweist, aufzunehmen und zu handhaben. Eine entsprechende Ausbildung der Zuführvorrichtung wird also vorausgesetzt.

Erfindungsgemäß umfaßt die Zuführvorrichtung mindestens eine Spannvorrichtung, in der ein aktiver Elektrodenabschnitt in vertikaler Stellung drehfest faßbar ist. Die Spannvorrichtung kann sowohl zur Aufnahme eines verbrauchten aktiven Elektrodenabschnitts als auch eines neuen aktiven Elektrodenabschnitts dienen. Im ersten Fall erfolgt mittels der Spannvorrichtung im Zusammenwirken mit der Annippelungsvorrichtung ein Abschrauben des verbrauchten aktiven Elektrodenabschnitts von dem übrigen Teil der Kombinationselektrode, während im zweiten Fall die Spannvorrichtung und die obere Annippelungsvorrichtung ein Annippeln des neuen Elektrodenabschnitts an das untere Ende der Kombinationselektrode bewirken. Die Drehbewegung wird dabei durch die obere Annippelungsvorrichtung erzeugt, während der untere Elektrodenabschnitt drehfest in der Spannvorrichtung gehalten wird.

Es ist zweckmäßig, daß die Spannvorrichtung mindestens drei in einer horizontalen Ebene radial zueinander bewegliche, hydraulische oder pneumatisch betätigte Spannbacken umfaßt.

Diese Spannbacken können gekühlt sein und/oder mit einer hochtemperaturfesten Beschichtung, z.B. Graphit oder dgl., versehen sein. Auch die pneumatische oder hydraulische Steuervorrichtung der Spannbacken muß entsprechend den extremen Betriebsbedingungen ausgelegt sein.

Vorteilhafterweise ist die Spannvorrichtung vertikal federnd angeordnet. Auf diese Weise werden unzulässige Stoßkräfte im Betrieb kompensiert. Ferner können Abweichungen in der Achslage der Kombinationselektrode in bezug auf den anzunippelnden neuen Elektrodenabschnitt in etwa ausgeglichen werden. Schließlich kann durch die Federung auch die axiale Relativbewegung beim Anschraub- bzw. Abschraubvorgang zwischen der Kombinationselektrode und dem unteren Elektrodenabschnitt herbeigeführt werden.

Für den Anschraub- und Abschraubvorgang kann natürlich auch die obere Annippelungsvorrichtung entsprechend abgesenkt bzw. angehoben werden, und zwar mittels einer entsprechenden Steuerung des Kranhakens durch die Bedienungsperson bzw. ein Steuerprogramm entsprechend der Steigung des Gewindes der Schraubnippel und der zugehörigen Bohrungen an den Elektrodenabschnitten.

Es ist von besonderem Vorteil, wenn mehrere Spannvorrichtungen mit einem beweglichen Träger angeordnet sind.

Der bewegliche Träger kann als frei oder auf Schienen oder dgl. verfahrbarer Wagen ausgebildet sein. Dieser Wagen kann geradlinig oder längs eines Teilkreises in verschiedene Positionen bewegbar sein. Auf diese Weise kann ein und derselbe Träger bzw. Wagen mit entsprechenden Spannvorrichtungen dazu dienen, in einem vorgegebenen, z.B. durch ein Programm gesteuerten Takt zuerst den verbrauchten aktiven Elektrodenabschnitt mittels einer ersten Spannvorrichtung von der Kombinationselektrode abzunippeln, worauf im nächsten Takt die nächste Spannvorrichtung mit einem bereits aufgenommenen neuen Elektrodenabschnitt unter die Kombinationselektrode gefahren wird und dieser neue Elektrodenabschnitt an die Kombinationselektrode angenippelt wird. In der Zwischenzeit kann die verbrauchte Elektrode bereits aus ihrer Spannvorrichtung entfernt werden. Es kann eine weitere Spannvorrichtung vorgesehen werden, die zwischenzeitlich mit einem neuen Elektrodenabschnitt beschickt wird. Auf diese Weise lassen sich im schnellen Takt Elektroden neu rüsten. Dabei kann die gesamte Abfolge durch ein Steuerprogramm gesteuert werden, und zwar vom Herausführen der teilweise verbrauchten Kombinationselektrode aus dem Ofen bis zum erneuten Einführen der neu gerüsteten Kombinationselektrode in den Ofen.

Es ist ferner von Vorteil, daß die Spannvorrichtung mit Kreuzschlitten angeordnet ist, die in der Horizontalebene in beiden Koordinatenrichtungen indexierbar sind.

Durch die indexierbare Spannvorrichtung kann der neue Elektrodenabschnitt exakt axial fluchtend in bezug auf den oberen Teil der Kombinationselektrode ausgerichtet werden, so daß zur Vermeidung einer Beschädigung oder Fressens der Gewinde Bohrung und Schraubnippel von zwei zu verbindenden Elektrodenabschnitten genau ausgerichtet und deshalb problemlos verbunden werden können.

Es ist zweckmäßig, daß die Kreuzschlitten über eine hydraulische Servosteuerung ansteuerbar sind. Die Koordinaten werden der Servosteuerung über eine optische Meß- und Positioniereinrichtung eingegeben, die die Position des oberen Teil der Kombinationselektrode in bezug auf den unteren mit dem oberen Elektrodenteil zu verbindenden Abschnitt bestimmt und den gesamten Regelkreis so steuert, daß die beiden zu verbindenden Teile in genaue axiale Ausrichtung zueinander gebracht werden.

Sowohl die hydraulische Servosteuerung als auch die optische Meß- und Positioniereinrichtung können beliebig und in bekannter Weise ausgebildet sein.

Weitere Vorteile der erfindungsgemäßen Anordnung werden im folgenden anhand von in den Zeichnungen dargestellten Ausführungsbeispielen erläutert.

Es zeigt:

Fig. 1 den oberen Teil einer Kombinationselektrode und im Schnitt die erfindungsgemäße obere Annippelungsvorrichtung,

Fig. 2 im Schnitt den unteren Teil der Kombinationselektrode,

Fig. 3 einen Schnitt durch die obere Annippelungsvorrichtung im Detail und um 90° in bezug auf die Darstellung in Fig. 1 versetzt,

Fig. 4 die Seitenansicht eines ersten Ausführungsbeispiels einer erfindungsgemäßen Zuführvorrichtung für die anzunippelnden aktiven Elektrodenabschnitte,

Fig. 5 eine Draufsicht auf das erste Ausführungsbeispiel dieser Zuführvorrichtung,

Fig. 6 einen Schnitt durch ein zweites Ausführungsbeispiel einer erfindungsgemäßen Zuführvorrichtung für die aktiven Elektrodenabschnitte, und

Fig. 7 eine Kreuzschlittenanordnung für die Spannvorrichtung einer erfindungsgemäßen Zuführvorrichtung.

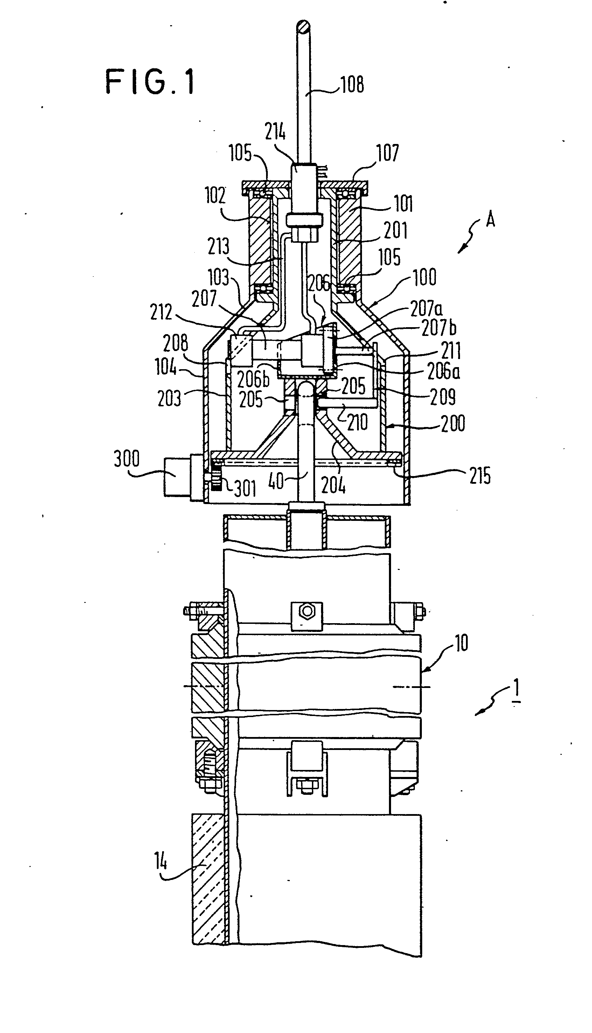

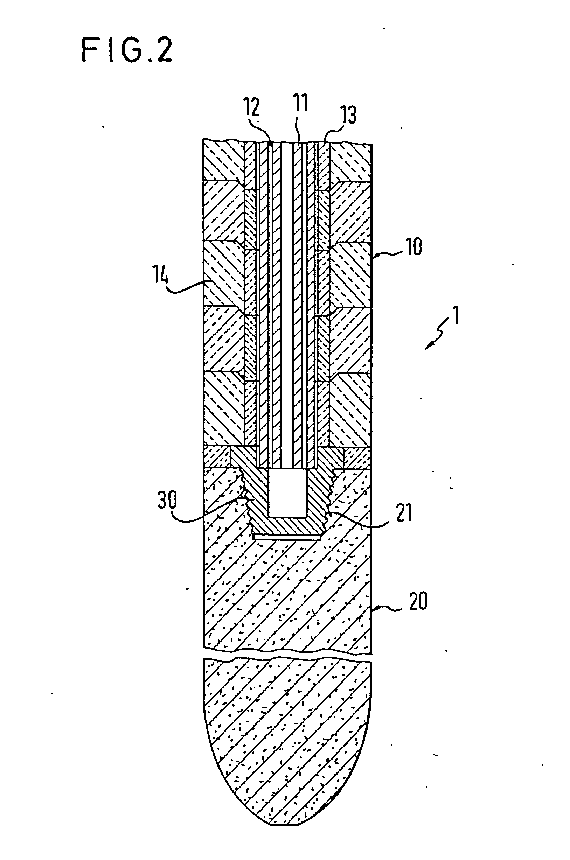

Die sich aus den Fig. 1 und 2 - im wesentlichen schematisch - ergebende, insgesamt mit 1 bezeichnete Kombinationselektrode besteht aus einem insgesamt mit 10 bezeichneten oberen permanenten Abschnitt und einem insgesamt mit 20 bezeichneten unteren aktiven Abschnitt.

Der obere permanente Abschnitt 10 wird im wesentlichen durch einen Schaft 11 aus Metall, z.B. Kupfer, gebildet, der ein Kühlsystem mit Kanälen 12 aufweist. Der Metallschaft 11 ist gegenüber thermischen und mechanischen Beanspruchungen durch eine innere Schutzhülle 13 und eine äußere Schutzhülle 14 geschützt. Diese können aus geeignetem Material bestehen und einen entsprechenden Aufbau aufweisen.

Der untere aktive Elektrodenabschnitt 20 besteht aus einem sich verbrauchenden Material, z.B. Graphit. Der aktive Elektrodenabschnitt 20 kann selbst aus mehreren Abschnitten bestehen. Die Verbindung des unteren aktiven Elektrodenabschnitts 20 mit dem unteren Ende des oberen permanenten Abschnitts 10 erfolgt mittels eines Schraubnippels 30 mit Außengewinde, der in eine Bohrung bzw. Schachtel 21 mit Innengewinde am oberen Ende des unteren aktiven Elektrodenabschnitts 20 eingeschraubt ist. Falls der untere aktive Abschnitt 20 selbst aus mehreren Abschnitten besteht, sind diese ebenfalls mit Schraubnippel miteinander verbunden.

Der obere permanente Abschnitt 10 der Kombinationselektrode 1 ist an seinem oberen Ende mit einem Anschlußelement 15 versehen, das eine Bohrung aufweist, in die in noch näher zu schildernder Weise ein Verriegelungsbolzen der im folgenden näher zu beschreibenden oberen Annippelungsvorrichtung eingreifen kann.

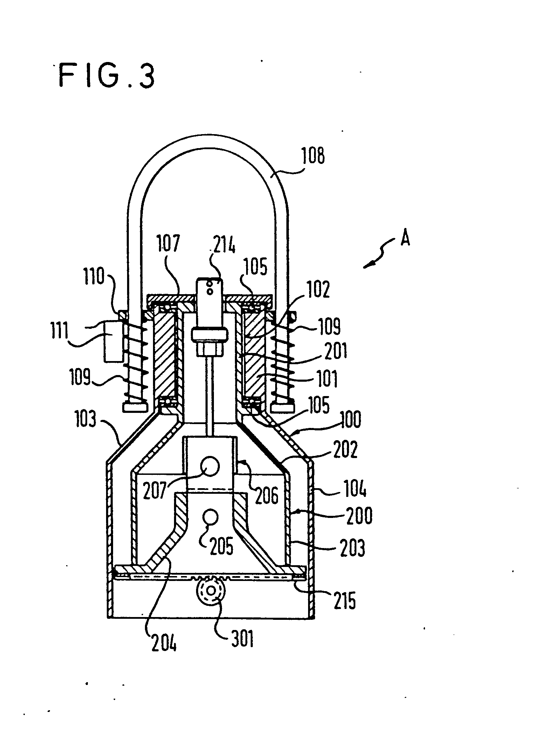

Die obere Annippelungsvorrichtung ergibt sich aus den Fig. 1 und 3.

Wie sich aus diesen Figuren ersehen läßt, besteht die Annippelungsvorrichtung A grundsätzlich aus einem äußeren, im wesentlichen hohlzylindrischen Element, das ingesamt mit 100 bezeichnet ist, und einem koaxial im äußeren Element angeordneten inneren, ebenfalls im wesentlichen hohlzylindrischen Element, das insgesamt mit 200 bezeichnet ist.

Das äußere Element 100 umfaßt im wesentlichen ein Lagergehäuse 101 mit einer Lagerbohrung 102, einen daran anschließenden konischen Abschnitt 103 und einen ebenfalls daran anschließenden zylindrischen Abschnitt 104.

In vergleichbarer Weise setzt sich das innere Element 200 zusammen aus einer zylindrischen Lagerhülse 201, einem daran anschließenden konischen Abschnitt 202 und einem ebenfalls daran anschließenden zylindrischen Abschnitt 203.

Die zylindrische Lagerhülse 201 des inneren Elements 200 ist in der Lagerbohrung 102 des äußeren Elements 100 dadurch drehbar gelagert, daß zwei Axiallager 105 und eine Abschlußplatte 107 vorgesehen sind, wodurch über die beschriebene Lageranordnung im wesentlichen axiale Kräfte übertragbar sind.

Das innere Element 200 ist als Kupplungsvorrichtung ausgebildet. Hierfür ist im Inneren des zylindrischen Abschnitts 203 eine trichterförmig sich nach oben verjüngende Einführungsanordnung 204 vorgesehen. In deren Wandungselemente sind zwei Verriegelungsbohrungen 205 vorgesehen, deren Achsen miteinander fluchten und senkrecht zur gemeinsamen Achse der beiden Elemente 100, 200 verlaufen. Am oberen inneren Ende des Wandungselements der Einführungsanordnung 204 stützt sich ein Lagergehäuse 206 ab, in dem ein mit 207 bezeichneter Betätigungszylinder pneumatischer oder hydraulischer Art gelagert ist. Hierzu ist ein Flansch 207a des Betätigungszylinders 207 mit einer zur gemeinsamen Achse der Elemente 100 und 200 parallelen Wand 206a des Lagergehäuses verschraubt,

während eine zusätzliche Abstützung des Betätigungszylinders 207 an der zur Wand 206a parallelen Wand 206b des Lagergehäuses 206 erfolgt. Um den Betätigungszylinder einfach in das innere Element 200 einsetzen zu können, weist dieses eine erste Montageöffnung 208 auf. Die Kolbenstange 207b des Betätigungszylinders 207 ist endseitig über eine zur gemeinsamen Achse der Elemente 100 und 200 parallele Traverse 209 mittels eines Verriegelungsbolzens 210 verbunden, dessen Achse senkrecht zur gemeinsamen Achse der Elemente 100 und 200 verläuft und mit den Achsen der Verriegelungsbohrungen 205 fluchtet, so daß der Verriegelungsbolzen 210 in die Verriegelungsbohrungen 205 eingeschoben werden kann und in dieser Lage durch die Verriegelungsbohrungen 205 gelagert ist. Zur Montageerleichterung dieser Anordnung ist der diesbezügliche Wandungsabschnitt des inneren Elements 200 mit einer zweiten Montageöffnung 211 versehen.

Zur Betätigung des Betätigungszylinders 207, d.h. zum Hin- und Herschieben des Kolbens und damit der Kolbenstange 207b und dadurch des Verriegelungsbolzens 210, ist der Betätigungszylinder 207 in üblicher Weise mit einer Steueranordnung, z.B. einer Magnetventilanordnung 212, verbunden. Die Magnetventilanordnung 212 ist ihrerseits über eine Leitung 213 mit einem Drehgelenk 214 verbunden, das selbst mit einer hydraulischen oder pneumatischen Quelle verbunden ist. Das hydraulische Drehgelenk 214 erlaubt also die Leitungsverbindung zwischen einer ortsfesten Quelle und den Leitungen des drehbaren inneren Elements 200.

Um das innere Element 200 relativ zum äußeren Element 100 über die gemeinsame Achse zu drehen, ist an dem äußeren Element 100 ein Hydraulikmotor 300 angeflanscht, der ebenfalls über entsprechende Leitungen und das hydraulische Drehgelenk 214 mit der Quelle verbunden ist. Auf der zur gemeinsamen Achse der Elemente 100 und 200 senkrechten Achse des Motors 300 ist ein Ritzel 301 angeordnet, das in Eingriff steht mit einem an der unteren Stirnfläche des inneren Elements 200 angeordneten Zahnkranz 215.

Um die Annippelungsvorrichtung an den Haken eines Hebezeugs, z.B. eines Hallenkrans, anhängen zu können, ist ein U-förmiger Anhängebügel 108 vorgesehen, der sich über eine Druckfederanordnung 109 an einer Stützplatte 110 abstützt, die mit dem äußeren Element 100 verbunden ist. Damit ist der Anhängebügel 108 in Richtung der gemeinsamen Achse der Elemente 100 und 200, d.h. in Einsatzrichtung, relativ zu den Elementen 100 und 200 beweglich und die auf die Annippelungsvorrichtung ausgeübte Zugkraft wird durch die Druckfederanordnung 109 aufgenommen.

Zur Messung der von der Druckfederanordnung 109 aufgenommenen Zugkraft beim Einsatz der Annippelungsvorrichtung ist dieser Druckfederanordnung 109 eine nur schematisch dargestellte Meß- und Steuereinrichtung 111 zugeordnet, so daß in Abhängigkeit der Zugkraft über die Steueranordnung 212 der Betätigungszylinder 207 der Kupplungsvorrichtung entsprechend gesteuert werden kann.

Das bereits erwähnte Anschlußelement 15 der Kombinationselektrode 1 kann in die beschriebene Kupplungsvorrichtung eingeführt werden, so daß zur Ankupplung der Verriegelungsbolzen 210 der Kupplungsvorrichtung in die Bohrung des Anschlußelements 15 eingreifen kann.

Zum Ankuppeln einer Kombinationselektrode 1 an die mittels eines üblichen Hebezeugs, z.B. des Hallenkrans, bewegte Annippelungsvorrichtung A wird diese auf das obere Ende der Kombinationselektrode 1 abgesenkt, so daß dessen Anschlußelement 15 in die trichterförmige Einführungsanordnung 204 hineingleitet, wozu der Verriegelungsbolzen 210 in seiner in der Fig. 1 dargestellten Offenstellung sich befindet. Sobald die Bohrung des Anschlußelements 15 mit der Kombinationselektrode 1 fluchtend zu den beiden Verriegelungsbohrungen 205 der Kupplungsvorrichtung der Annippelungsvorrichtung A liegt, wird der Verriegelungsbolzen 210 in die beiden Verriegelungsbohrungen 205 und in die Bohrung des Anschlußelements 15 der Kombinationselektrode 1 eingeschoben, wofür der Kolben des Betätigungszylinders 207 entsprechend betätigt wird. Die hierfür erforderliche Zuschaltung des Betätigungszylinders 207 kann entweder über einen beim Einschieben des Anschlußelements 15 der Kombinationselektrode in die trichterförmige Einführungsanordnung 204 der Annippelungsvorrichtung A betätigten Fühler erfolgen oder ferngesteuert durch den Fühler des Hebezeugs.

Auf diese Weise ist die Kombinationselektrode 1 mit der Annippelungsvorrichtung A gekuppelt. Solange die Kombinationselektrode 1 an der Annippelungsvorrichtung A und diese wiederum am Haken des Hebezeugs hängt und damit eine entsprechende Zugkraft auf die Federanordnung 109 ausgeübt wird, verhindert die Meß- und Steuereinrichtung 111 ein unbeabsichtigtes Lösen der Kupplungsvorrichtung der Annippelungsvorrichtung A durch Verschieben des Verriegelungsbolzens 210 aus der Verriegelungsstellung in die Offenstellung.

Zum Abkuppeln der Annippelungsvorrichtung A von der Kombinationselektrode 1 wird durch entsprechende Steuerung des Betätigungszylinders 207, z.B. über eine Fernsteuerleitung durch die das Hebezeug bedienende Person, der Verriegelungsbolzen 210 aus seiner Verriegelungsstellung in seine Offenstellung bewegt, so daß die Annippelungsvorrichtung A von der Kombinationselektrode 1 abgezogen werden kann.

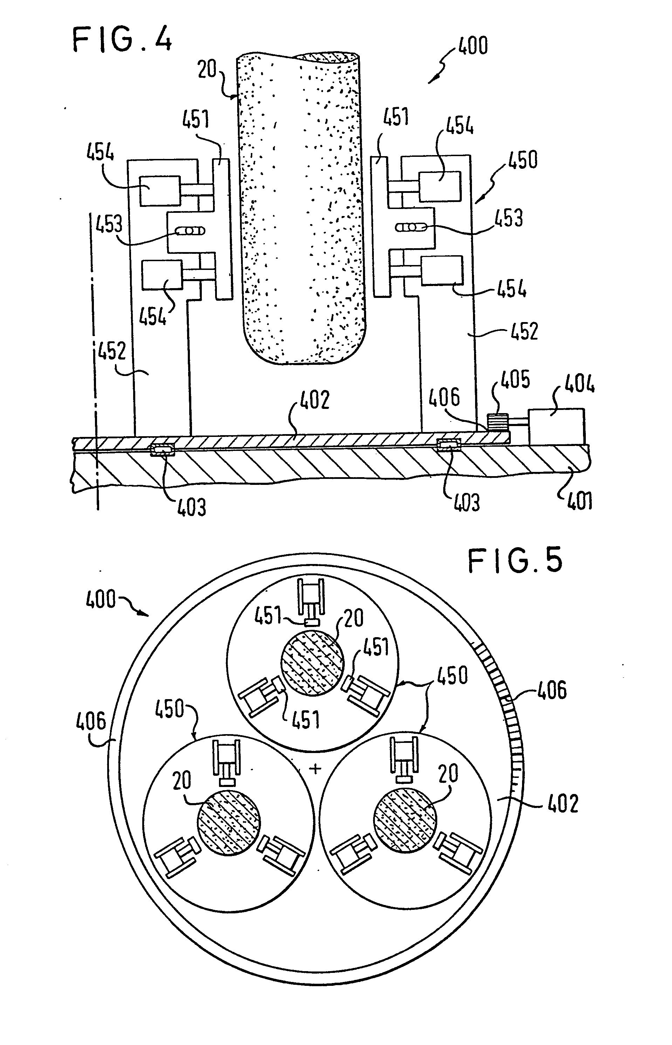

Mit der beschriebenen oberen Annippelungsvorrichtung A wirkt eine Zuführvorrichtung zusammen, von der ein erstes Ausführungsbeispiel in den Fig. 4 und 5 dargestellt und insgesamt mit 400 bezeichnet ist. Die Zuführvorrichtung dient zur Handhabung der aktiven Elektrodenabschnitte, die entweder von dem unteren Ende der Kombinationselektrode 1 abgeschraubt oder an dieses angenippelt werden sollen.

Die Zuführvorrichtung 400 gemäß den Fig. 4 und 5 umfaßt eine Bodenplatte 401, auf der um eine vertikale Achse drehbar ein Träger in Form eines Drehtellers 402 drehbar gelagert ist. Die Drehlagerung erfolgt über geeignete, nur schematisch angedeutete Lager 403. Um den Drehteller 402 antreiben zu können, ist ein Motor 404 vorgesehen, dessen Ritzel 405 in eine längs eines Kreisbogens verlaufende Verzahnung 406 im Drehteller eingreift.

Auf dem Drehteller 402 sind längs eines Teilkreises in gleichmäßigem Abstand voneinander drei insgesamt mit 450 bezeichnete Spannvorrichtungen angeordnet. Jede Spannvorrichtung umfaßt drei in einer horizontalen Ebene und in bezug aufeinander bewegliche Spannbacken 451. Jede Spannbacke 451 ist von einem Halter 452 getragen und auf diesem z.B. längs einer Linearführung verschieblich gelagert. Zur Betätigung sind jeder Spannbacke 451 zwei hydraulische oder pneumatische Betätigungszylinder 454 zugeordnet. Diese Betätigungszylinder 454 werden über eine nicht dargestellte und in bekannter Weise ausgebildete Steuervorrichtung angesteuert, so daß die Spannbacken 454 der Spannvorrichtung synchron bewegt werden, um auf diese Weise in exakte Anlage an einen aktiven Elektrodenabschnitt gebracht zu werden, um diesen mit möglichst genau vertikaler Achse drehfest einzuspannen.

Die Zuführvorrichtung 400 wirkt mit der oberen Annippelungsvorrichtung A auf folgende Weise zusammen.

Die Zuführvorrichtung 400 ist an einem geeigneten Ort neben dem Ofen angeordnet. Die obere Annippelungsvorrichtung A wird mit einer daran hängenden Kombinationselektrode 1 mit einem verbrauchten aktiven Elektrodenabschnitt über die Zuführvorrichtung 400 in eine Position gefahren, daß der verbrauchte Elektrodenabschnitt in eine leere Spannvorrichtung 450 abgesenkt werden kann. Durch Betätigen der Spannbacken wird in dieser Spannvorrichtung 450 der verbrauchte Elektrodenabschnitt drehfest fixiert. Dies kann schon bei Betriebstemperatur der Elektrode erfolgen. Hierfür sind die Spannbacken 451 gekühlt und/oder mit einer mechanisch und thermisch hochbeanspruchbaren Beschichtung versehen. Nach erfolgter Fixierung des verbrauchten Elektrodenabschnitts wird der obere Abschnitt der Kombinationselektrode 1 so in bezug auf den verbrauchten Elektrodenabschnitt gedreht, daß sich der Schraubnippel löst. Hierfür wird das innere Element 200 der oberen Annippelungsvorrichtung A durch den Antrieb 300 in entsprechender Weise in bezug auf das äußere Element 100 gedreht, das zusätzlich noch ortsfest fixiert werden kann, falls dies erforderlich sein sollte. Auf diese Weise wird der verbrauchte Elektrodenabschnitt von der Kombinationselektrode abgenippelt.

Nach erfolgter Abnippelung des verbrauchten Elektrodenabschnitts wird der Drehteller 402 um eine Teilung gedreht, so daß die nächste Spannvorrichtung 450, die bereits mit einem neuen aktiven Elektrodenabschnitt geladen ist, unter die Kombinationselektrode gelangt. Durch Heben oder Senken der oberen Annippelungsvorrichtung A wird dafür Sorge getragen, daß der Schraubnippel am unteren Ende der Kombinationselektrode in die Schachtel am oberen Ende des neuen aktiven Elektrodenabschnitts exakt eingreift. Danach wird der obere Teile der Kombinationselektrode durch entsprechenden Antrieb des inneren Elements 200 in bezug auf das äußere Element 100 der oberen Annippelungsvorrichtung A so gedreht, daß sich der Schraubnippel am unteren Ende der Elektrode in das Innengewinde der Schachtel am oberen Ende des neuen aktiven Elektrodenabschnitts soweit eindreht, bis die Kontaktflächen des unteren Endes der Kombinationselektrode mit den Kontaktflächen des oberen Endes des neuen aktiven Elektrodenabschnitts in die gewünschte, elektrisch gut leitende Anlage gelangen. Die in der oberen Annippelungsvorrichtung A vorgesehene Anordnung zur Drehmomentbegrenzung verhindert ein Überdrehen der Gewinde des Schraubnippels bzw. der Schachtel des neuen aktiven Elektrodenabschnitts.

Während des geschilderten Annippelungsvorgangs kann der abgeschraubte, verbrauchte Elektrodenabschnitt aus der Spannvorrichtung entnommen und in diese ein neuer Elektrodenabschnitt eingesetzt werden. Auch in die beispielsweise vorgesehene dritte Spannvorrichtung kann während der geschilderten Arbeiten ein neuer Elektrodenabschnitt eingesetzt und für den Annippelungsvorgang vorbereitet werden.

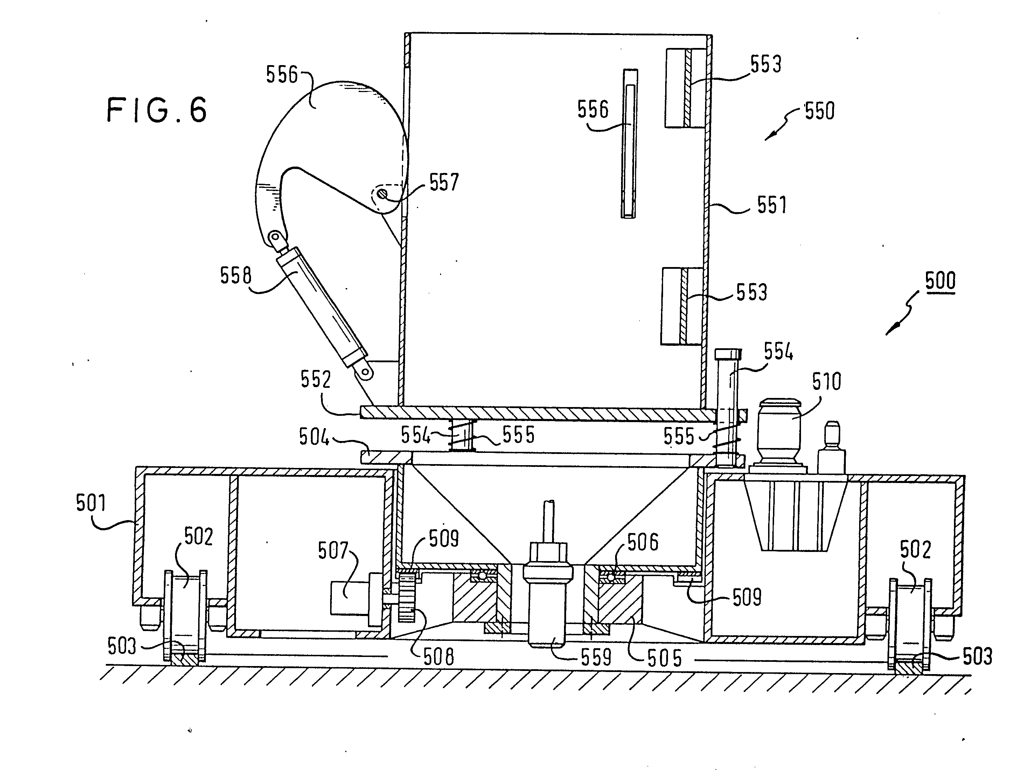

Ein zweites Ausführungsbeispiel einer Zuführvorrichtung ergibt sich der Figur 6. Diese Zuführvorrichtung ist insgesamt mit 500 bezeichnet.

Die Zuführvorrichtung 500 umfaßt einen Wagen 501, der mittels Rollen 502 auf längs eines Kreises geführten Schienen 503 verfahrbar ist. Auf dem Wagen 501 ist ein Drehteller 504 um eine vertikale Achse drehbar gelagert. Hierfür weist der Wagen 501 eine Lagerstelle 505 mit Axiallagern 506 auf. Zum Drehen des Drehtellers 504 in bezug auf den Wagen 501 ist ein Motor 507 vorgesehen, dessen Ritzel 508 in einen Zahnkranz 509 des Drehtellers 504 eingreift.

Der Motor 507 kann ein Hydraulikmotor sein, der durch eine Hydraulikanlage 510 betätigt wird.

Auf dem Wagen 501 ist mindestens eine insgesamt mit 550 bezeichnete Spannvorrichtung angeordnet. Diese besteht aus einem vertikal ausgerichteten Rohr 551, das oben offen ist und unten durch eine den Mantel des Rohrs überragende Platte 252 geschlossen ist. Der Innendurchmesser des Rohrs 551 ist größer als der größte Außendurchmesser der zur Verwendung gelangenden aktiven Elektrodenabschnitte, so daß ein derartiger Elektrodenabschnitt von oben her in das Rohr 551 einschiebbar ist. An der Innenwand des Rohrs 551 sind Zentrierbacken 553 angeordnet, die einen Elektrodenabschnitt beim Einschieben in das Rohr 551 so zentrieren, daß der Elektrodenabschnitt in bezug auf seine Achse möglichst vertikal ausgerichtet wird.

Das Rohr 551 ist an dem Drehteller 504 mittels drei längs eines Kreises im gleichen Abstand angeordneter Bolzen 554 axial beweglich gelagert, wobei zwischen der Platte 552 und dem Drehteller 504 noch Druckfedern 555 angeordnet sind. Auf diese Weise werden durch die Druckfedern 555 eventuell beim Einschieben eines aktiven Elektrodenabschnitts in das Rohr 551 auftretende, unzulässig hohe Stoßkräfte kompensiert mit der Folge der Vermeidung einer Beschädigung der Elektrodenabschnitte bei diesem Vorgang.

Ferner sind um das Rohr 551 zumindestens drei Spannbacken 556 verteilt. Jede dieser Spannbacken 556 ist an einem Lager 557 um eine horizontale Achse schwenkbar gelagert und steht mit einem Betätigungszylinder 558 in Wirkverbindung. Durch Betätigen des jeweiligen Betätigungszylinders 558 wird die Spannbacke 556 um die horizontale Achse des Lagers 557 geschwenkt, wobei in der einen Schwenkrichtung die Spannbacke durch eine Ausnehmung im Rohr 551 in dieses eingreift und in Anlage an die Mantelfläche eines darin befindlichen aktiven Elektrodenabschnitts gelangen kann und in der anderen Richtung aus dem Rohr 551 wieder zurückgezogen wird.

Auch die Betätigungszylinder 558 können von der Hydraulikanlage 510 gespeist werden. Hierfür werden die nicht gezeichneten Leitungen über ein Drehgelenk 559 geführt, das in der Achse des Drehtellers 504 angeordnet ist.

Die beschriebene Zuführvorrichtung 500 und die zugehörige Spannvorrichtung 550 funktionieren wie folgt.

Falls von einer Kombinationselektrode ein verbrauchter Elektrodenabschnitt abgenippelt werden soll, wird diese Kombinationselektrode mittels der oberen Annippelungsvorrichtung A über das Rohr 551 geführt, und zwar in eine Position, in der die Achse der Kombinationselektrode in etwa mit der Achse des Rohres 551 fluchtet. Durch Absenken der Annippelungsvorrichtung A und damit der Kombinationselektrode mittels des Hubzeugs wird der abzunippelnde Elektrodenabschnitt in das Rohr 551 eingeführt und dabei durch die Zentrierbacken 553 möglichst genau axial zentriert. In dieser Stellung werden die Spannbacken 556 in das Rohr 551 eingefahren und in Anlage an die Mantelfläche des Elektrodenabschnittes gebracht, so daß dieser Elektrodenabschnitt drehfest und mit seiner Achse vertikal ausgerichtet im Rohr 551 fixiert wird.

In dieser Stellung kann dann der Elektrodenabschnitt von dem übrigen Teil der Kombinationselektrode abgeschraubt werden. Zur Abkürzung dieses Vorgangs kann nicht nur das innere Element 200 der oberen Annippelungsvorrichtung A entsprechend in bezug auf das äußere Element 100 gedreht werden, sondern auch das Rohr 551 selbst durch den Motor 507.

Nach erfolgtem Abschrauben des verbrauchten Elektrodenabschnitts von der betrachteten Kombinationselektrode wird der Wagen 501 um einen Teilungsweg bewegt, so daß eine weitere Spannvorrichtung 550, die bereits mit einem neuen Elektrodenabschnitt beschickt ist, unter die Kombinationselektrode gelangt. Hierfür müßte gegebenenfalls die Kombinationselektrode etwas angehoben werden. Der neue Elektrodenabschnitt ist in der neu eingenommenen Stellung des Wagens 501 fluchtend in bezug auf die zu ergänzende Kombinationselektrode ausgerichtet. Schraubnippel und Schachtel der beiden zu verbindenden Elektrodenabschnitte werden dann miteinander in Eingriff gebracht, worauf sowohl durch Betätigen der oberen Annippelungsvorrichtung A als auch des Drehtellers 504 der unteren Zuführvorrichtung 500 das Anschrauben des neuen Elektrodenabschnitts an die Kombinationselektrode erfolgt.

Nach erfolgter Verbindung wird die neu gerüstete Kombinationselektrode von der Zuführvorrichtung 500 abgezogen und mittels der Annippelungsvorrichtung A und dem Kran in ihre Stellung am Ofen gebracht. Danach wird auch die obere Annippelungsvorrichtung A von der Kombinationselektrode wieder abgezogen.

Auch die Spannvorrichtung 550 kann natürlich darauf eingerichtet sein, einen verbrauchten Elektrodenabschnitt bei dessen Betriebstemperatur aufzunehmen. Hierfür sind die großer thermischer und mechanischer Beanspruchung ausgesetzten Teile entsprechend ausgelegt. So können die Bauteile wegen der thermischen Beanspruchung gekühlt und/oder mit einer thermisch resistenten Beschichtung versehen sein.

Sowohl der Wagen 501 als auch der Drehteller 504 können durch eine Steuereinrichtung derartig gesteuert werden, daß im Zusammenwirken mit der oberen Annippelungsvorrichtung A sämtliche Tätigkeiten vollautomatisch oder halbautomatisch ablaufen.

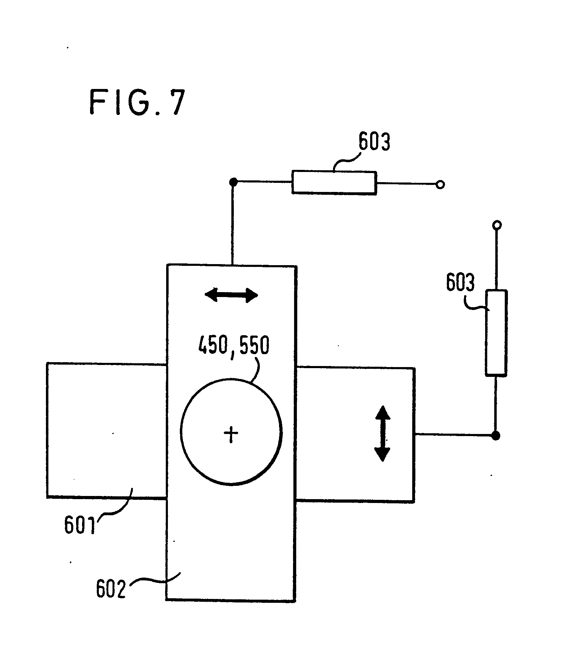

Um eine Spannvorrichtung für einen abzuschraubenden oder anzuschraubenden Elektrodenabschnitt noch besser in bezug auf den übrigen Teil der Kombinationselektrode ausrichten zu können, kann die Spannvorrichtung 450, 550 auf einer Indexieranordnung angebracht sein, die sich schematisch aus Fig. 7 ergibt.

Danach besteht diese Anordnung aus zwei Kreuzschlitten 601 und 602, wobei auf dem oberen Kreuzschlitten die Spannvorrichtung 450, 550 angeordnet ist. Die Kreuzschlitten 601, 602 können in einer Horizontalebene längs der beiden Koordinatenachsen durch eine nur schematisch angedeutete hydraulische Servosteuerung 603 bewegt werden, wodurch die gewünschte exakte Ausrichtung der Spannvorrichtung 450, 550 in bezug auf die an der oberen Annippelungsvorrichtung A angehängte jeweilige Kombinationselektrode erreicht wird.

Die Kreuzschlitten 601, 602 können auf dem Drehteller 402 der Zuführvorrichtung 400 bzw. dem Drehteller 504 der Zuführvorrichtung 500 angeordnet sein.

Die hydraulische Servosteuerung ist regelbar durch eine optische Meß- und Positioniereinrichtung, die die jeweiligen Positionen der Spannvorrichtung 450, 550 und der oberen Annippelungsvorrichtung A und damit der an dieser hängenden Kombinationselektroden erfaßt und die Kreuzschlitten 601, 602 so steuert, daß eine genaue Fluchtung erreicht wird. Die Grobpositionierung erfolgt über entsprechende Steuerung des Drehtellers 402 der Zuführvorrichtung 400 bzw. des Wagens 501 der Zuführvorrichtung 500.

Patentansprüche:

1. Vorrichtung zum Annippeln von aktiven Elektrodenabschnitten an den permanenten oberen Abschnitt einer Kombinationselektrode mittels die Verbindung bildender Schraubnippel, dadurch gekennzeichnet,
   a) daß die Vorrichtung aus einem äußeren, im wesentlichen hohlzylindrischen Element (100) und einem koaxial im äußeren Element (100) angeordneten inneren, ebenfalls im wesentlichen hohlzylindrischen Element (200) besteht,
   b) daß das innere Element (200) als Kupplungsvorrichtung ausgebildet ist, die mit einem am oberen Ende des permanenten Abschnitts der Kombinationselektrode angeordneten Anschlußelement kuppelbar ist und
   c) daß ein Antrieb (300) vorgesehen ist, durch den das innere Element (200) in bezug auf das äußere Element (100) um die Achse drehbar ist.

2. Vorrichtung nach Anspruch 1, dadurch gekennzeichnet, daß die Kupplungsvorrichtung (100) eine steuerbare Verriegelungseinrichtung (207, 210) für den lösbaren Eingriff mit einem Anschlußelement (40) des permanenten Abschnitts einer Kombinationselektrode und eine Einführungsanordnung (204) zum Bewegen des Anschlußelements (40) des permanenten Abschnitts zu der Verriegelungseinrichtung (207, 210) umfaßt und das äußere Element (100) eine zur Stoßdämpfung in Einsatzrichtung relativ zur Verriegelungseinrichtung (207, 210) bewegliche Anhängevorrichtung (108, 109) zum Einhängen der Annippelungsvorrichtung an einem Hebezeug aufweist.

3. Vorrichtung nach Anspruch 1 und 2, dadurch gekennzeichnet, daß die Verriegelungseinrichtung (207, 210) pneumatisch oder hydraulisch steuerbar ist.

4. Vorrichtung nach einem der vorhergehenden Ansprüche, dadurch gekennzeichnet, daß die Verriegelungseinrichtung einen senkrecht zur Einsatzrichtung von einer Öffnungsstellung in eine Verriegelungsstellung und umgekehrt beweglichen Verriegelungsbolzen (210) umfaßt.

5. Vorrichtung nach einem der vorhergehenden Ansprüche, dadurch gekennzeichnet, daß der Verriegelungsbolzen (210) über einen pneumatischen oder hydraulischen Betätigungszylinder (20) beweglich ist.

6. Vorrichtung nach Anspruch 5, dadurch gekennzeichnet, daß der Betätigungszylinder (207) im inneren Element (200) oberhalb des Verriegelungsbolzens (210) und parallel zu diesem angeordnet ist.

7. Vorrichtung nach Anspruch 6, dadurch gekennzeichnet, daß die Kolbenstange (207b) des Betätigungszylinders (207) und der Verriegelungsbolzen (210) endseitig über eine zu der Einsatzrichtung parallele Traverse (209) miteinander verbunden sind.

8. Vorrichtung nach einem der vorhergehenden Ansprüche 5 bis 7, dadurch gekennzeichnet, daß der Betätigungszylinder (207) über eine Steuereinrichtung (212, 111) derart betätigbar ist, daß beim Aufsetzen der Kupplungsvorrichtung auf das Anschlußelement (40) einer Kombinationselektrode der Verriegelungsbolzen (210) aus der Offenstellung in die Verriegelungsstellung bewegt wird, beim Vorhandensein einer Zugkraft auf die Annippelungsvorrichtung der Verriegelungsbolzen (210) in der Verriegelungsstellung arretiert ist und/oder im zugkraftfreien Zustand bzw. beim Unterschreiten eines bestimmten Mindestwerts der Zugkraft der Verriegelungsbolzen (210) aus der Verriegelungsstellung in die Offenstellung bewegt wird.

9. Vorrichtung nach einem der vorhergehenden Ansprüche, dadurch gekennzeichnet, daß die Einführungsanordnung aus einem in Einführungsrichtung des Anschlußelements (40) einer Kombinationselektrode in die Kupplungsvorrichtung sich trichterförmig verjüngenden Wandungselements (204) des inneren Elements (200) gebildet ist.

10. Vorrichtung nach einemder vorhergehenden Ansprüche, dadurch gekennzeichnet, daß die Anhängevorrichtung einen Anhängebügel (108) umfaßt, der sich an dem äußeren Element (100) über eine Federanordnung (109) beweglich abstützt, die der im Einsatz auftretenden Zugkraft entgegenwirkt.

11. Vorrichtung nach den Ansprüchen 8 und 10, dadurch gekennzeichnet, daß die Steuereinrichtung (111) für den Betätigungszylinder (207) mit der Federanordnung (109) des Anhängebügels (108) zusammenwirkt.

12. Vorrichtung nach einem der vorhergehenden Ansprüche, dadurch gekennzeichnet, daß an dem äußeren Element ein vorzugsweise hydraulisch betätigter Motor (300) mit einem Ritzel (301) angeordnet ist, das in einem Zahnkranz (215) des inneren Elements (200) im Eingriff steht.

13. Vorrichtung nach Anspruch 12, dadurch gekennzeichnet, daß die Achse des Ritzels (301) senkrecht zur Achse der Elemente (100, 200) verläuft und daß der Zahnkranz (215) an der unteren Stirnfläche des inneren Elements (200) angeordnet ist.

14. Vorrichtung nach einem der Ansprüche 12 oder 13, dadurch gekennzeichnet, daß im Getriebezug zwischen dem Motor (300) und dem inneren Element (200, 215) eine Anordnung zur Drehmomentbegrenzung vorgesehen ist.

15. Vorrichtung nach einem der vorhergehenden Ansprüche, dadurch gekennzeichnet, daß die pneumatischen oder hydraulischen Leitungen der Baugruppen des inneren Elements (200) über ein an diesem angeordnetes Drehgelenk (214) geführt sind.

16. Vorrichtung nach Anspruch 1, dadurch gekennzeichnet, daß eine Zuführvorrichtung (400; 500) für mindestens einen aktiven Elektrodenabschnitt (20) vorgesehen ist, die mit der Kupplungsvorrichtung (A; 200) für den permanenten Abschnitt (10) einer

Kombinationselektrode (1) zusammenwirkt.

17. Vorrichtung nach Anspruch 16, dadurch gekennzeichnet, daß die Zuführvorrichtung (400; 500) mindestens eine Spannvorrichtung (450; 550) umfaßt, in der ein aktiver Elektrodenabschnitt (20) in vertikaler Stellung drehfest faßbar ist.

18. Vorrichtung nach Anspruch 17, dadurch gekennzeichnet, daß die Spannvorrichtung (450; 550) mindestens drei in einer horizontalen Ebene radial zueinander bewegliche, hydraulische oder pneumatisch betätigte Spannbacken (451; 556) umfaßt.

19. Vorrichtung nach Anspruch 17, dadurch gekennzeichnet, daß die Spannvorrichtung (550) vertikal federnd angeordnet ist.

20. Vorrichtung nach einem der vorhergehenden Ansprüche, dadurch gekennzeichnet, daß mehrere Spannvorrichtungen (450; 550) mit einem beweglichen Träger (402; 501, 504) angeordnet sind.

21. Vorrichtung nach einem der vorhergehenden Ansprüche, dadurch gekennzeichnet, daß die Spannvorrichtung (450; 550) auf Kreuzschlitten (601, 602) angeordnet ist, die in der Horizontalebene in beiden Koordinatenrichtungen indexierbar sind.

22. Vorrichtung nach Anspruch 21, dadurch gekennzeichnet, daß die Kreuzschlitten (601, 602) über eine hydraulische Servo-Steuerung (603) ansteuerbar sind.

23. Vorrichtung nach Anspruch 22, dadurch gekennzeichnet, daß die Servosteuerung (603) über eine optische Meß- und Positioniereinrichtung regelbar ist.

FIG.1
108
214
105
107
102
101
201
213
105
103
100
206
207
207a
212
207b
208
211
104
206b
206a
205
203
205
209
210
200
300
215
301
40
204
10
1
14
A

0063278

FIG.2

12
11
13
10
14
1
30
21
20

FIG.3

108
A
107
214
105
110
102
111
109
201
109
101
105
103
100
202
207
206
104
200
205
203
215
204
301

FIG.4
400
20
451
454
451
454
450
453
453
454
454
452
452
405
404
406
402
403
403
401
FIG.5
400
451
20
451
450
406
451
450
406
20
20
402

500
550
553
551
553
554
510
502
503
555
509
505
506
556
559
555
557
509
554
508
552
504
507
556
558
502
503
501

FIG. 6

FIG. 7

603
603
450, 550
601
602

Europäisches Patentamt

# EUROPÄISCHER RECHERCHENBERICHT

0063278

Nummer der Anmeldung

EP 82102768.7

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int. Cl.3) |
|---|---|---|---|
| A | US - A - 824 153 (G.O. SEWARD) * Gesamt * | 1,2,4, 9 | H 05 B 7/101 |
| A | DE - A - 2 306 483 (DAIDO SEIKO) | | |
| A | DE - A1 - 2 918 757 (THE STEEL COMPANY) * Seiten 8-10; Fig. 1,2 * | 1 | |

RECHERCHIERTE SACHGEBIETE (Int. Cl.3)

H 05 B 7/00

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 30-06-1982 | TSILIDIS |